# EUROPÄISCHE PATENTSCHRIFT

(11) **EP 2 331 839 B1**
(45) Veröffentlichungstag und Bekanntmachung des Hinweises auf die Patenterteilung: **25.01.2012**
(21) Anmeldenummer: 09778287.4
(22) Anmeldetag: 02.09.2009
(51) Int. Cl.: F16D 65/18, F16D 59/02

(54) **DOPPELSEGMENTBREMSE**
DOUBLE SEGMENT BRAKE
FREIN À DOUBLE SEGMENT

(30) Priorität: 10.09.2008 DE 102008046535
(43) Veröffentlichungstag der Anmeldung: 15.06.2011
(73) Patentinhaber: Chr. Mayr GmbH + Co. KG, 87665 Mauerstetten (DE)
(72) Erfinder: KLINGLER, Günther, 86869 Oberostendorf (DE); EBERLE, Johann, 87660 Irsee (DE); DROPMANN, Christoph, 87600 Kaufbeuren (DE)
(74) Vertreter: Ruschke, Hans Edvard
(86) Internationale Anmeldenummer: PCT/EP2009/006365
(87) Internationale Veröffentlichungsnummer: WO 2010/028768

(56) Entgegenhaltungen:
- DE-A1-102005 022 898
- DE-U1-202007 014 518

## Beschreibung

### Technisches Gebiet:

Die Erfindung betrifft den Anbau elektromagnetisch lüftender Federdruckbremsen an eine Maschinenwand, Flanschplatte oder ähnliches, gemäß dem Oberbegriff des Anspruchs 1.

### Stand der Technik:

Aus der DE 10 2005 022 898 A1 bzw. WO 2006/136246 A1 der Fa. Mayr ist eine sog. Segmentbremse als redundantes Bremssystem, z.B. für Aufzüge, bekannt. Die besagte Bremse entsteht durch strinseitige Anordung von zwei rechteckigen elektromagnetisch lüftenden Federdruckbremsen am Umfang eines Bremsrotors. Diese Bremssegmente umfassen jeweils eine rechteckige Ankerscheibe und einen Spulenträger, der je nach Ausführungsform eine ovale Magnetspule oder zwei kreisrunde Magnetspulen aufnehmen kann. Der Bremsrotor rotiert im ungebremsten Zustand zwischen einer Maschinenwand und den rechteckigen Ankerscheiben. Er ist auf der abzubremsenden Welle axial beweglich, um einerseits zu erreichen, dass die Maschinenwand bei einer Bremsung als Gegenfläche für den Druck der Ankerscheiben auf den Bremsrotor wirken kann. Andererseits erlaubt die axial bewegliche Anordnung im ungebremsten bzw. gelüfteten Zustand einen freien Lauf des Bremsrotors zwischen den Ankerscheiben und der Maschinenwand. Bei einer Bremsung bzw. im ungelüfteten Zustand bewirken beidseitig auf den Rotorstirnseiten angeordnete durchgehende Reibbeläge eine hohe Reibung des Rotors zwischen den Ankerscheiben und der Maschinenwand.

In der DE 10 2006 016 434 A1 bzw. WO 2007/115730 der Fa. Mayr ist eine sog. Vierkantbremse dargestellt, bei welcher die Magnetspulen im Gegensatz zu der in der DE 10 2005 022 898 A1 beschriebenen Segmentbremse nicht in zwei separaten rechteckigen Spulenträgern sondern in einem einzigen Spulenträger einem sog. Vierkant aufgenommen werden. In diesem Vierkant sind zwei ovale Spulen vorgesehen, denen die jeweils zwei rechteckigen Ankerscheiben zugeordnet sind. Die Vierkantbremse unterscheidet sich von der Segmentbremse also dadurch, dass sich die zwei Bremssegmente einen gemeinsamen Spulenträger teilen. Die Ankerscheiben sind dabei jedoch genau wie bei der Segmentbremse als separate Bauteile ausgeführt.

In der Gebrauchsmusterschrift DE 20 2007 014 518 U1, der Fa. Mayr, wird eine sog. Viersegmentbremse gezeigt, bei welcher ein einstückiger quadratischer Spulenträger mit vier kreisrunden Spulen und vier separaten, den Spulen zugeordneten Ankerscheiben eine Bremsanordung bilden, welche vierfach redundant ist. Die Bremsanordung ist so ausgelegt, dass die vier Bremssegmente zusammen ein Bremsmoment von 133,3% des für eine Notbremsung erforderlichen Bremsmomentes ergeben. Somit hat diese Bremsanordnung selbst bei Ausfall eines der vier Bremssegmente ein für eine ordnungsgemäße Bremsung erforderliches Bremsmoment von 100%. Bei der Viersegmentbremse handelt es sich also um ein redundantes Bremssystem, das, wenn kein Bremssegment ausfällt, mit 133,3% des erforderlichen Bremsmoments bremst. Demgegenüber bremsen die absolut redundanten Systeme der Segmentbremse und der Vierkantbremse im Notfall mit 200% des erforderlichen Bremsmomentes, sofern keines der jeweils zwei Bremssegmente ausfällt. Da bei elektromagnetisch lüftenden Federdruckbremsen im Falle einer Notbremsung, wie z.B. bei einem Stromausfall, schlagartig das volle Bremsmoment auftritt, können unerwünschte und störende starke Stöße und Schwingungen bei den davon betroffenen Vorrichtungsteilen entstehen. Das reduzierte maximale Bremsmoment von 133,3% bei der Viersegmentbremse trägt daher dazu bei, dass diese Stöße und Schwingungen deutlich geringer ausfallen als dies bei den Systemen mit einem maximalen Bremsmoment von 200% der Fall ist. Das maximale Bremsmoment spielt insofern eine Rolle als in der Regel davon ausgegangen werden muss, dass keines der Bremssegmente ausfällt. Die redundanten Bremssegmente dienen schließlich nur dazu, die Sicherheit mittels Redundanz zu erhöhen.

### Aufgabe:

Die Aufgabe der vorliegenden Erfindung besteht darin, dass ausgehend vom nächstliegenden Stand der Technik in Gestalt der Gebrauchsmusterschrift DE 20 2007 014 518 U1 der Anmelderin eine neuartige Bremse geschaffen wird, welche die bekannte Redundanz und das reduzierte maximale Bremsmoment der vier Bremssegmente aufweist, aber dennoch eine fertigungstechnisch einfachere Gestaltung der Bremse insbesondere im Bereich des/ der Spulenträger(s) vorsieht.

### Lösung:

Die Aufgabe wird dadurch gelöst, dass der einstückige Spulenträger der Viersegmentbremse nach DE 20 2007 014 518 U1 konstruktiv in der Mitte geteilt wird und somit in zwei separate Bremseinheiten mit jeweils zwei Ankerscheiben beiderseits der abzubremsenden Welle/ Nabe aufgeteilt wird. Durch die Teilung des Spulenträgers wird die Fertigung dieser neuen, als Doppelsegmentbremse bezeichneten Bremse gegenüber der aus der DE 20 2007 014 518 bekannten Viersegmentbremse erheblich günstiger. Die neuartige Doppelsegmentbremse stellt somit bei deutlich niedrigeren Fertigungskosten ebenfalls vier separat schaltbare Bremssegmente bereit.

Der Vorteil der einfacheren Fertigung der neuartigen Bremse liegt darin, dass ein quadratischer Spulenträger mit vier Spulen schwieriger zu fertigen ist und kostenmäßig teurer ist als zwei gleiche kleinere rechteckige Körper mit jeweils zwei magnetischen Spulen. Bei der derzeitigen Lage bei der Stahlbeschaffung und den hohen Kosten bei Stahlmaterial, insbesondere bei magnetischen Stählen, muss auf die Verfügbarkeit von bestimmten Stahlprofilen und Rohlingen besonders geachtet werden.

### Ausführungsbeispiel:

In den Zeichnungen ist ein Ausführungsbeispiel der Erfindung dargestellt:
Figur 1 zeigt die neuartige Bremse im Schnitt. Der Schnittverlauf A-A ist in Figur 2 eingezeichnet und verläuft in der oberen Hälfte durch die Spule und in der unteren Hälfte durch den Rotor.
**Figur 2** zeigt eine Rückansicht der Bremse, wobei die in dieser Ansicht verdeckten vier Spulen 3 (3.1, 3.2, 3.3, 3.4) gestrichelt eingezeichnet sind.
**Figur 3** zeigt eine Explosionsdarstellung der neuartigen Bremse mit den zwei Spulenträgern 1 (1.1, 1.2), den vier den zwei Spulenträgern jeweils in Paaren zugeordneten Ankerscheiben 2 (2.1, 2.2, 2.3, 2.4), der verzahnten Nabe 6, dem Rotor 4 sowie der an eine Maschinenwand anzubauenden Flanschplatte 12.

### Beschreibung:

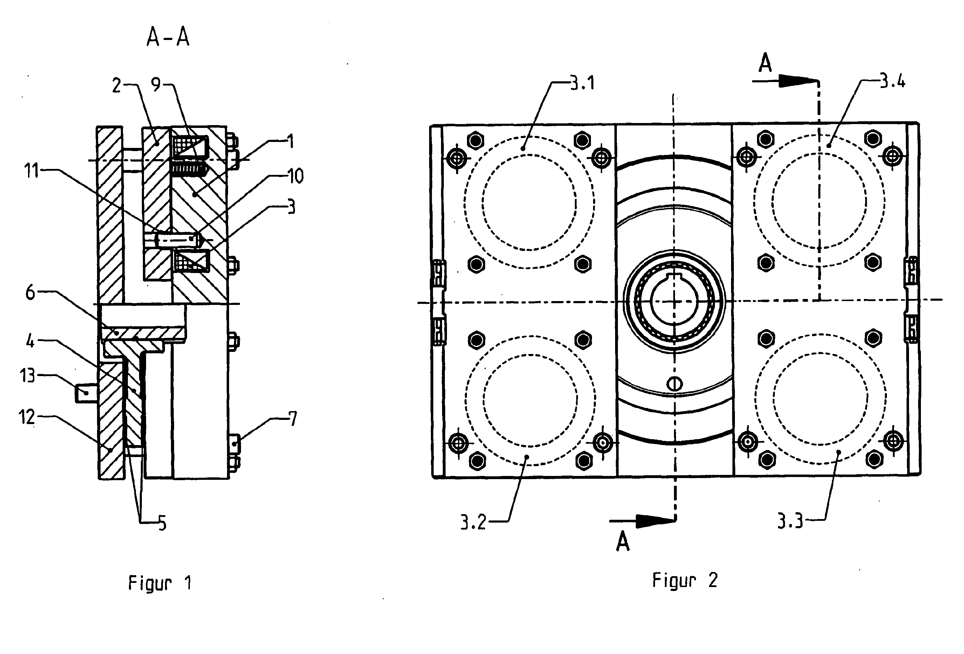

In Figur 1 ist die neuartige Bremse im Schnitt dargestellt. Es handelt sich um eine ruhestrombetätigte elektromagnetisch lüftende Federdruckbremse mit nachfolgend erläuterter Wirkungsweise:

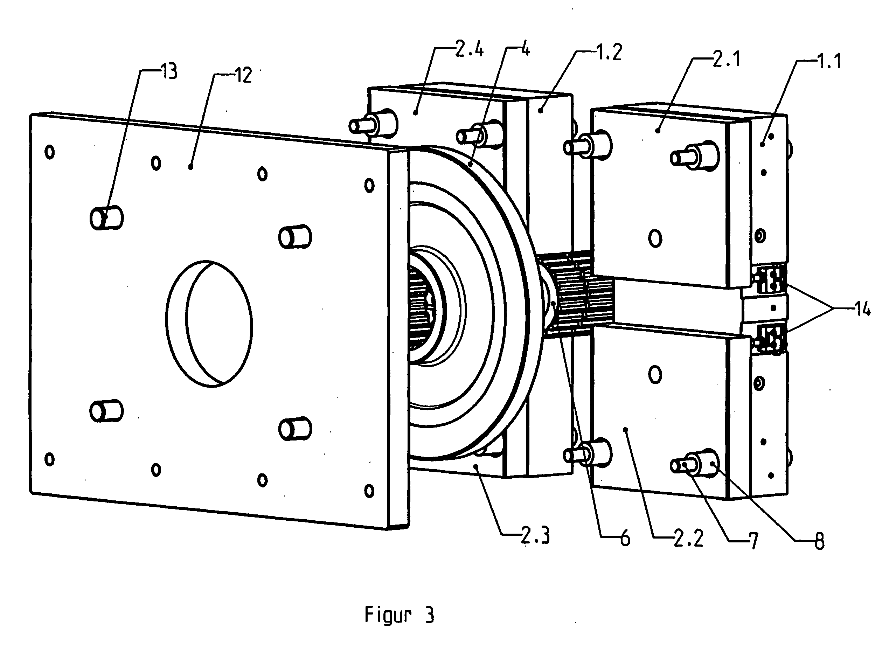

Wird auf den Spulenträger 1 mit seinen vier Magnetspulen 3 (3.1, 3.2, 3.3, 3.4) eine Gleichspannung gegeben, erzeugen die Spulen 3 ein Magnetfeld und die vier Ankerscheiben 2 (2.1, 2.2, 2.3, 2.4, siehe auch Figur 3) werden über einen Luftspalt gegen den Federdruck der Druckfedern 9 angezogen. Ein durch die Federn im ungelüfteten Zustand der Bremse (d. h. wenn die Bremse sich im Eingriff befindet) vorhandener Abstand/Luftspalt zwischen den Ankerscheiben 2 und den Spulenträgern 1 wird dabei verringert bzw. geschlossen. Dies gibt den Bremsrotor 4 frei, so dass er zwischen der Flanschplatte 12 und den vier Ankerscheiben 2 frei drehen kann.

Auf einer nicht dargstellten Welle, welche es abzubremsen gilt, wird die außen verzahnte Nabe 6 befestigt. Das Drehmoment wird über eine Passfederverbindung von der Welle auf die verzahnte Nabe 6 übertragen. Von der außen verzahnten Nabe 6 wird das Drehmoment über eine Innenverzahnung im Bremsrotor 4 weitergeleitet.

Wird der Strom von den Magnetspulen 3 (3.1, 3.2, 3.3, 3.4) weggenommen, bricht das Magnetfeld zusammen und die vier Ankerscheiben 2 (2.1, 2.2, 2.3, 2.4, siehe auch Figur 3) werden von den Druckfedern 9 gegen den Bremsrotor 4 mit den auf beiden Stirnflächen angebrachten Reibbelägen 5 gedrückt. Als Gegenreibfläche dient eine Flanschplatte 12, welche mit Befestigungsschrauben 13 an einer nicht dargestellten Maschinenwand befestigt wird. Die Übertragungs-/ Führungsstifte 10 dienen dazu, das vom Bremsrotor 4 über die Reibbeläge 5 auf die Ankerscheiben 2 übertragene Drehmoment aufzunehmen. Die insgesamt vier Übertragungs-/ Führungsstifte 10 sind im Spulenträger 1 eingepresst und ragen in die Bohrung 11 in jeder der vier Ankerscheiben 2 hinein, um über die Drehmomentaufnahme hinaus auch die Ankerscheiben in ihrer axialen Bewegung zwischen gelüftetem und ungelüftetem Zustand der Bremse zu führen. Mit den jeweils in den Ecken der Spulenträger angeordneten vier Befestigungsschrauben 7 wird der jeweilige Spulenträger mit den darauf angeordneten zwei Ankerscheiben über Abstandsbuchsen 8 an der Flanschplatte 12 befestigt. Mit diesen Abstandsbuchsen 8 wird der Abstand/ Luftspalt zwischen den Spulenträgern 1 und den Ankerscheiben 2 (2.1, 2.2, 2.3, 2.4) erzeugt, welcher wie zuvor beschrieben beim Anziehen der Ankerscheibe auf Null zurückgeht und den Bremsrotor 4 zum Drehen freimacht.

**Figur 2** verdeutlicht, dass es sich in den zwei separaten Spulenträgern um vier separate Magnetspulen 3.1, 3.2, 3.3, 3.4 handelt, welche alle vier separat mit Strom versorgt bzw. angesteuert werden können.

Aus der Explosionsdarstellung der **Figur 3** wird deutlich, dass jeder einzelnen der vier Magnetspulen 3.1, 3.2, 3.3, 3.4 jeweils eine separate Ankerscheibe 2.1, 2.2, 2.3, 2.4 zugeordnet ist. Erfindungsgemäß sind den vier Magnetspulen- und Ankerscheibenpaaren jeweils zwei als separate Bauteile ausgeführte Spulenträger 1.1 und 1.2 zugeordnet. Im rechteckigen Spulenträger 1.1 befinden sich die kreisförmig runden Magnetspulen 3.1 und 3.2 und im Spulenträger 1.2 die analog ausgebildeten Magnetspulen 3.3 und 3.4. Somit entstehen vier getrennte und damit voneinander unabhängige Bremskreise auf den zwei voneinander separaten Spulenträgern, die somit relativ lang und schmal sind und daher bei der Herstellung nur entsprechend klein-formatige Ausgangsmaterialien (Stangenmaterial aus magnetischem Werkstoff) erfordern, die einfacher und billiger zu beschaffen sind als voluminöse magnetische Rohmaterialien, wie sie für den einstückigen Spulenträger beim nächstliegenden Stand der Technik erforderlich sind.

In **Figur 3** wird außerdem gezeigt, dass sich am Spuleriträger 1.1 an einer seiner Schmalseiten zwei Mikroschalter 14 befinden, deren Schaltstössel an der zugehörigen Ankerscheibe 2.1 bzw. 2.2 angreifen, so dass bei jeder der Ankerscheiben 2.1, 2.2 erfasst werden kann, ob die Bremse gebremst oder gelüftet ist. In entsprechender Weise sind am Spulenträger 1.2 an einer seiner Schmalseiten zwei weitere (in der Zeichnung nicht sichtbare) Mikroschalter angeordnet, deren Schaltstössel ebenfalls an den zugehörigen Ankerscheiben 2.3 und 2.4 angreifen. Dieser sog. Lüftüberwachung durch die Mikroschalter 14 kommt insbesondere bei der Anzeige von Störfällen eine besondere Bedeutung zu, wie zum Beispiel bei Verklemmungen an den Ankerscheiben. Die vier Mikroschalter 14 können jeder separat aber auch in Reihe geschaltet werden. Bei einer Reihenschaltung wird ganz allgemein nur ein Störfall der gesamten Bremse angezeigt, während wenn die Mikroschalter separat geschaltet und überwacht werden, auch der jeweils zugehörige defekte Bremskreis bzw. das defekte Segment festgestellt und angezeigt werden kann. Über die Reihenschaltung kann nur bestimmt werden, dass ein Störfall bei mindestens einem der Bremskreise/ Bremssegmente vorliegt. Wie viele und vor allem welche Bremskreise/ Bremssegmente tatsächlich betroffen sind, lässt sich damit aber nicht bestimmen.

### Bezugszeichenliste

- 1.: Spulenträger
1.1 Erster Spulenträger
1.2 Zweiter Spulenträger
- 2.: Ankerscheibe
2.1 Erste Ankerscheibe
2.2 Zweite Ankerscheibe
2.3 Dritte Ankerscheibe
2.4 Vierte Ankerscheibe
- 3.: Magnetspule
3.1 Erste Magnetspule
3.2 Zweite Magnetspule
3.3 Dritte Magnetspule
3.4 Vierte Magnetspule
- 4.: Bremsrotor
- 5.: Reibbeläge
- 6.: Verzahnte Nabe
- 7.: Befestigungsschrauben
- 8.: Abstandsbuchse
- 9.: Federn
- 10.: Übertragungs-/ Führungsstift
- 11.: Bohrung in Ankerscheibe 2
- 12.: Flanschplatte
- 13.: Befestigungsschrauben für Flanschplatte 12
- 14.: Mikroschalter Lüftüberwachung

## Patentansprüche

1. Segmentbremse mit mehreren elektromagnetisch lüftenden Federdruckbremsen zum Anbau an eine Maschinenwand oder Flanschplatte (12) oder ähnliches,
wobei die Bremse einen Spulenträger (1) mit vier stirnseitig gleichmäßig verteilten Magnetspulen (3.1, 3.2, 3.3 ,3.4) und vier diesen zugeordneten Ankerscheiben (2.1, 2.2, 2.3, 2.4) aufweist,
wobei die Ankerscheiben (2.1, 2.2, 2.3, 2.4) durch Federdruck in Richtung auf einen gemeinsamen zentralen Bremsrotor (4) mit auf jeder Stirnfläche angebrachten Reibbelägen (5) beaufschlagbar sind,
wobei der Bremsrotor (4) auf einer axial verzahnten Nabe (6) der abzubremsenden Welle axial beweglich gelagert ist,
so dass vier unabhängig voneinander betätigbare Bremskreise jeweils aus Magnetspule und Ankerscheibe vorgesehen sind,
wobei insgesamt vier Übertragungs-/Führungsstifte (10) im Spulenträger (1) eingepresst sind und jeweils eine Bohrung (11) in jeder der vier Ankerscheiben (2.1, 2.2, 2.3, 2.4) hinein ragen, um die Ankerscheiben in ihrer axialen Bewegung zu führen und das beim Bremsen vom Bremsrotor (4) auf die Elnkerscheiben übertragene Bremsmoment aufzunehmen,
**dadurch gekennzeichnet, dass** der Spulenträger in zwei gleichartige Spulenträgerteile (1.1, 1.2) beiderseits der abzubremsenden Welle/Nabe (6) aufgeteilt ist, und dass jeweils zwei Ankerscheiben (2.1, 2.2 bzw. 2.3, 2.4) jeweils einem der Spulenträgerteile (1.1, 1.2) und deren zwei Magnetspulen (3.1, 3.2 bzw. 3.3, 3.4) zugeordnet sind.

2. Segmentbremse nach Anspruch 1, **dadurch gekennzeichnet, dass** die Spulenträgerteile (1.1,1.2) langgestreckt und schmal ausgebildet sind.

3. Segmentbremse nach Anspruch 1, **dadurch gekennzeichnet, dass** die Spulenträgerteile (1.1,1.2) entweder rechteckig oder quadratisch oder rund oder oval ausgestaltet sind.

4. Segmentbremse nach Anspruch 1 oder 3, **dadurch gekennzeichnet, dass** die Ankerscheiben (2.1, 2.2, 2.3, 2.4) entweder rechteckig oder quadratisch oder rund oder oval ausgestaltet sind.

5. Segmentbremse nach einem der voranstehenden Ansprüche 1-4, **dadurch gekennzeichnet, dass** für jeden der vier Bremskreise eine Lüftüberwachung (14) vorgesehen ist.

6. Segmentbremse nach dem Anspruch 5 , **dadurch gekennzeichnet, dass** die vier Lüftüberwachungen (14) elektrisch in Reihe geschaltet sind.

7. Segmentbremse nach Anspruch 1, bei der die Führungs-/Übertragungsstifte (10) jeweils innerhalb der Magnetspulen (3.1, 3.2, 3.3, 3.4) angeordnet sind.

## Claims

1. A segment brake comprising a plurality of electromechanically disengaging spring pressure brakes for attachment to a machine wall or a flange plate (12) or the like,
said brake including a coil carrier (1) comprising four magnetic coils (3.1, 3.2, 3.3, 3.4) being uniformly distributed at the end face of the coil carrier and four armature discs (2.1, 2.2, 2.3, 2.4) associated therewith,
said armature discs (2.1, 2.2, 2.3, 2.4) adapted to be urged by spring pressure towards a common central brake rotor (4) and having friction liners (5) attached to each such end face, and
said brake rotor (4) mounted for axial movement on an axially toothed hub (6) of the shaft to be slowed down
so as to provide four independently actuatable brake circuits each comprising a magnetic coil and an armature disc,
with a total of four transfer/guide rods (10) pressed into coil carrier (1) to extend into a hole (11) through each one of the four armature discs (2.1, 2.2, 2.3, 2.4) so as to guide the axial movement of said armature discs and to receive the brake torque transferred from brake rotor (4) to said armature discs as braking takes place,
**characterized in that** the coil carrier is subdivided into two similar coil carrier sections (1.1, 1.2) disposed on either side of the shaft/hub (6) to be retarded and **in that** coil carrier sections (1.1, 1.2) each comprise two armature discs (2.1, 2.2 or 2.3, 2.4) and the two magnetic coils (3.1, 3.2 or 3.3, 3.4) associated therewith.

2. Segment brake as claimed in claim 1, **characterized in that** coil carrier sections (1.1, 1.2) are elongated and have a narrow width.

3. Segment brake as claimed in claim 1, **characterized in that** coil carrier sections (1.1, 1.2) are one of rectangular, square, circular and oval.

4. Segment brake as claimed in claim 1 or 3, **characterized in that** armature discs (2.1, 2.2, 2.3, 2.4) are one of rectangular, square, circular and oval.

5. Segment brake as claimed in any one of the preceding claim 1-4, **characterized in that** a disengagement monitor means (14) is provided for each one of said four brake circuits.

6. Segment brake as claimed in claim 5, **characterized in that** said four disengagement monitor meanss (14) are series connected electrically.

7. Segment brake as claimed in claim 1 in which guide/transfer rods (10) are disposed within said magnetic coils (3.1, 3.2, 3.3, 3.4).

## Revendications

1. Frein à segment, comprenant plusieurs freins à ressort à desserrage électromagnétique, pour le montage sur une paroi de machine ou plaque de bride (12) ou analogues, dans lequel
le frein présente un porte-bobines (1) avec quatre bobines magnétiques (3.1, 3.2, 3.3, 3.4) régulièrement réparties du côté frontal et quatre disques d'induit (2.1, 2.2, 2.3, 2.4) associés à ces dernières,
les disques d'induit (2.1, 2.2, 2.3, 2.4) peuvent être sollicités par pression de ressort en direction d'un rotor de frein (4) commun central avec des garnitures de friction (5) placées sur chaque face frontale,
le rotor de frein (4) est monté mobile dans la direction axiale sur un moyeu (6) à denture axiale de l'arbre à freiner,
de sorte que sont prévus quatre circuits de freinage, actionnables indépendamment les uns des autres, composés chacun de la bobine magnétique et du disque d'induit, quatre broches de guidage/transmission (10) au total étant emmanchées dans le porte-bobines (1) et pénétrant chacune dans un alésage (11) de chacun des quatre disques d'induit (2.1, 2.2, 2.3, 2.4), pour guider les disques d'induit dans leur déplacement axial et absorber le couple de freinage, transmis aux disques d'induit, lors du freinage par le rotor de frein (4),
**caractérisé en ce que** le porte-bobines est partagé en deux parties de porte-bobines (1.1, 1.2) similaires de part et d'autre de l'arbre/moyeu (6) à freiner, et **en ce que** deux disques d'induit (2.1 2.2 ou 2.3, 2.4) sont respectivement associés à l'une des parties de porte-bobines (1.1, 1.2) et aux deux bobines magnétiques (3.1, 3.2 et/ou 3.3, 3.4) de ces dernières.

2. Frein à segment suivant la revendication 1, **caractérisé en ce que** les parties de porte-bobines (1.1, 1.2) ont une réalisation allongée et étroite.

3. Frein à segment suivant la revendication 1, **caractérisé en ce que** les parties de porte-bobines (1.1, 1.2) ont une configuration rectangulaire ou carrée ou ronde ou ovale.

4. Frein à segment suivant l'une des revendications 1 et 3, **caractérisé en ce que** les disques d'induit (2.1, 2.2, 2.3, 2.4) ont une configuration rectangulaire ou carrée ou ronde ou ovale.

5. Frein à segment suivant l'une des revendications précédentes 1 - 4, **caractérisé en ce qu'**un contrôle de desserrage (14) est prévu pour chacun des quatre circuits de freinage.

6. Frein à segment suivant la revendication 5, **caractérisé en ce que** les quatre contrôles de desserrage (14) ont un montage électrique en série.

7. Frein à segment suivant la revendication 1, dans lequel les broches de guidage/transmission (10) sont respectivement disposées à l'intérieur des bobines magnétiques (3.1, 3.2, 3.3, 3.4).
